# EUROPEAN PATENT SPECIFICATION

(11) **EP 4 409 135 B1**
(45) Date of publication and mention of the grant of the patent: **28.10.2026**
(21) Application number: 22790082.6
(22) Date of filing: 26.09.2022
(51) Int. Cl.: F03D 13/10, B66C 1/10, B66C 23/20, B66C 23/52, B66D 1/60, F03D 13/25

(54) **BLADE INSTALLATION TO AN OFFSHORE WIND TURBINE**
SCHAUFELINSTALLATION AN EINER OFFSHORE-WINDTURBINE
INSTALLATION DE PALE POUR ÉOLIENNE EN HAUTE MER

(30) Priority: 30.09.2021 NL 2029292
(43) Date of publication of application: 07.08.2024
(73) Proprietor: GustoMSC B.V., 3115 JD Schiedam (NL); National Oilwell Varco Norway AS, 4604 Kristiansand S (NO)
(72) Inventor: HØYDAL, Oddvar, 4604 Kristiansand S (NO); BARJAKTAROVIC, Boro, 4604 Kristiansand S (NO); STRAND, Thor Lars Ludvig, 4604 Kristiansand S (NO); BØHN, Kurt, 4604 Kristiansand S (NO); HAAVIND, Erik, 4604 Kristiansand S (NO)
(74) Representative: V.O.
(86) International application number: PCT/NL2022/050539
(87) International publication number: WO 2023/055231

(56) References cited:
- EP-A1- 3 507 490
- WO-A1-2020/085902
- WO-A1-2022/175315
- WO-A1-2022/238181
- CA-A1- 3 037 281
- KR-B1- 101 435 376

## Description

### Field of technology

The invention relates to a method and a tool for installation, maintenance and/or removal of blades to an offshore wind turbine.

### Background

For offshore wind turbines it is generally required to install their blades at the offshore site where the turbine will be operated, because the large size of the turbine and the blades makes it impractical to transport a turbine to the offshore site in a fully assembled state, e.g. from an onshore assembly site. A known blade offshore installation method is based on lifting the blades suspended in a rope into installation position with a crane. The installation position is generally a position where an end of the blade can engage, e.g. mate with, and be coupled with, the nacelle at the top of the tower of the turbine.

With the known method, blades for the wind turbines are lifted in an about horizontal position using a lifting yoke, also known as a spreader bar, suspended in a crane rope. It is understood that horizontal position is here meant to be a lying position and does not refer to exact alignment with a horizon. Similarly, vertical position is understood to be a standing position.

In the known method, the blades are lifted with the yoke and swung into the mating position using a high reaching crane. The procedure with the blade/yoke suspended in a rope is very weather sensitive and the weather conditions, in particular wind and/or waves, put restrictions to the operationability to the existing installation method. As the wind is increasing with height, the known method will become even more weather sensitive, in particular in view of the trend towards increasingly taller offshore wind turbines.

The number of vessels with the needed height capacity will thus become limited and especially in the future this will be critical in order to install all the planned offshore windfarms. When the wind turbines get higher and the blades get longer and heavier the vessel capacity will become critical.

Publication KR10-1435376 discloses a method for installing a blade to a nacelle of a wind turbine. The method comprises supporting the blade in longitudinal direction on a boom wherein the support frame at one end is movable over the deck of the jack-up and at the other end is movable with respect to the wind turbine tower. While moving the other end upward over the wind turbine tower, the angle of the boom, and consequently of the blade, changes from horizontal to near vertical.

Therefore, improvements are desired in the field of installation, maintenance and/or removal of blades to an offshore wind turbine.

### Brief description of the invention

An object of the present invention is to enable easier installation of a wind turbine blade to a nacelle of an offshore wind turbine, in particular for a relatively large wind turbine and/or in relatively poor weather conditions. An object is to at least partly alleviate one or more challenges of known installation methods, such as those identified in the background section above. An object is to at least provide an alternative blade installation method.

Thereto, an aspect of the invention provides a method for installing a wind turbine blade to a nacelle of an offshore wind turbine, comprising the steps of:
- Providing a vessel or barge with a number of wind turbine blades and a blade installer unit comprising a blade receiving cart including a blade receiver
wherein the blade installer unit is placed on the vessel or barge;
- At an installation site, i.e. at the offshore wind turbine, bringing a boom of the blade installer unit towards a wind turbine tower of the wind turbine, in particular with respect to the vessel;
- Actuating a tower gripping device unit, provided to the boom, until the tower gripping device unit engages the tower;
- Inserting a blade into the blade receiving cart, that may be positioned at a lower end of the boom or at least at a distance from an upper end of the boom, wherein the blade is in approximately horizontal position in the cart;
- Moving the blade receiving cart up, over the boom, towards the upper end of the boom of the blade installer unit;
- Rotating the blade receiver with respect to the cart with the blade until the blade is in approximately vertical position, for example during and/or after the moving of the blade receiving cart;
- Moving the blade with respect to the cart until the blade engages a blade receiving opening of the nacelle for coupling to the nacelle, thus at the top of the tower.

The blade may subsequently be coupled to the nacelle, in particular in a final stage of the installation method. The blade handling steps may be repeated to install multiple blades to the same nacelle, with the blade receiving cart moving back down along the boom after installation of each blade to receive a subsequent blade. Once blade installation work at the tower has been completed, the tower gripping device unit may be released, and the blade receiving cart and the boom may be returned, e.g. to initial positions, so that the vessel can depart from the tower, e.g. to a further tower for further blade installations.

In an advantageous embodiment, the boom of the blade installer unit is aligned with the wind turbine tower. Such alignment is preferably performed prior to bringing, in particular upending, the boom towards the tower. Also, such alignment is preferably performed prior to extending the boom. To that end, the blade installer unit and/or the boom of the blade installer unit can be mounted movable with respect to the deck of the vessel. For example, the blade installer unit can be mounted on an XY-skid allowing for longitudinal movement and transverse movement over the deck with respect to the deck. Alternatively, the blade installer unit can be mounted on a Y-skid allowing transverse movement over the deck with respect to the deck. Alternatively and/or additionally, such a skid may also allow for angular movement with respect to the deck. By providing movement with respect to the deck on the deck of the vessel or barge, the position of the boom can be better aligned with the position of the tower, in particular without requiring highly precise positioning of the vessel or barge itself. In a further embodiment, the boom of the blade installer unit and/or the blade installer unit may be provided on a cantilever, which cantilever is movable with respect to the deck of the vessel, for example by the described XY-skid, and can, in extended position, reach beyond the deck. Alternatively or additionally, a skid may be provided between the boom and the cantilever. Apart from the aligning, the skid and/or the cantilever may be used bring the boom towards the tower, e.g. after some or all of the aligning.

The blade can be brought into a blade receiver of the blade receiving cart for example by a small crane, which may be a relatively simple and light crane, that can be mounted on the vessel or barge. The crane may be mounted on the deck, or onto or around legs of e.g. a jack-up vessel. It shall be appreciated that alternatively or additionally one or more other types of manipulators than a crane could be used.

In an embodiment, the method comprises extending the boom of the blade installer unit by moving an extendable boom portion outward with respect to a base boom portion of the boom, preferably prior to the actuating of the tower gripping device unit. It shall be appreciated that such a boom extension raises the level of the upper end of the boom with respect to the lower end of the boom, which lower end may be at a level of a deck of the vessel. Thus, when the blade receiving cart is moved towards, e.g. to, the upper end of the boom, the blade receiving cart may then be moved towards, e.g. to, the upper end of the extendable boom portion.

The boom of the blade installer unit may thus be an extendable boom, and is preferably a truss like boom. On the boom, and on the base boom portion and the extendable boom portion, rails can be provided on which the cart can be transported. Alternatively, the cart could move over chords of the boom portion in an alternative manner, e.g. with rollers or hooks.

The method may further comprise adjusting the boom angle, in particular when the boom is in extended position, i.e. when the extendable boom portion has been moved outward with respect to the base boom portion. The angle of the boom can for example be adjusted by moving the boom over the optional XY-skid or Y-skid or angular skid or by adjusting the position of the optional cantilever and/or by adjusting the position of the tower gripping device unit and/or by extending or retracting the optional extendable boom portion. For example, the boom angle may then be set more vertical to reduce the horizontal loads on the wind turbine tower. A more vertical boom angle may also be beneficial for allowing a more vertical blade position. Alternatively and/or additionally, by adjusting the angle of the boom, the blade may be brought more in position to mate with the nacelle.

By rotating the blade receiver with respect to the cart, more precisely with respect to a part, e.g. base, of the cart which is engaged with the boom, with the blade from a horizontal position to a vertical position, the blade can be brought in a position that can be aligned with the nacelle receiving opening, in particular at a downward facing side of the nacelle, in which the blade is to be received. The cart, in particular the blade receiver, can be further adjustable in horizontal and/or vertical and/or angular direction to more precisely align with the nacelle's receiving interface, such as a blade receiving opening. Such an alignment structure may be helpful for aligning the blade with the nacelle receiving opening to optimally mate the blade with the nacelle.

Then, the blade can be moved upwardly to be received in the nacelle's blade receiving opening and to be coupled with the nacelle. For example, the cart may be provided with a transport mechanism to bring the blade further upwards until it engages with the nacelle. The cart may be provided with blade receiving elements, in particular flexible blade receiving elements providing a soft but firm grip, holding the blade in all positions.

In an embodiment, the optional base boom portion of the boom can be provided with a tower strut that is extendable from the base boom portion and supports on the tower. Alternatively and/or additionally, the tower gripping device unit, e.g. at the upper end of the boom, can be connected to the tower, and can, upon extending of the extendable boom portion outward with respect to the base boom portion, move upwardly along the tower. The tower gripping device unit may be foldable connected to e.g. the upper end of the boom, such that during extending of the boom, the tower gripping device unit is folded inwardly towards the boom. When the boom is in extended position, the tower gripping device unit may be folded out to engage with the wind turbine tower. It shall be appreciated that in the present context, folding and foldability may involve one or more of various possible movements, including upward and rotation and e.g. translational extension, with respect to the boom. Alternatively, the tower gripping device could be substantially fixed with respect to the boom, i.e. not being adjustable, possibly apart from the gripping of the tower itself. The tower gripping device unit may have various embodiments allowing to make contact with the wind turbine tower to provide for sufficient support for the boom to lean onto the tower.

The vessel or barge can be any type of vessel used in offshore installation, such as a vessel using dynamic positioning, or a jack-up vessel, or a self-propelled or towed barge, etc.

The blade installer unit may be a telescopic structure fixed to a vessel or barge and extendable towards the top of the wind turbine tower.

The blade installer unit may comprise a telescopic boom, a blade receiving cart or trolley and a tower guide or tower gripping device unit.

The upper end of the boom may during use be connected to the top of the tower, and/or to another part of the tower, and move synchronised with the tower, at least with a part of the tower to which the upper end of the boom is connected. This means that the relative motion between the blade mating face, i.e. a face of the blade configured to mate with the nacelle, and the hub interface, i.e. an interface of the nacelle or hub configured to mate with the blade mating face, becomes very much less. The boom can also be denoted as chute.

The blade installer unit may thus be a tool that can install the blades from a reasonable sized vessel without needing a large crane, and by using the crane or other manipulator that may be available on the vessel.

The blade is preferably upended to almost vertical before mating with the nacelle of the wind turbine, resulting in a lower gripping height of the blade and thus reducing the motions imposed by wind and wave actions.

The blade can be fed into the cart, also denoted as chute trolley, at lowest possible level and raised by the guided chute trolley (cart) upwardly along the boom of the blade installer unit. Alternatively, the blade can be fed to the cart, in particular to the blade receiver of the cart, when the cart is already in a more upward position along the boom. On the vessel, the blades are preferably stored and seafastened in a storage position, From the storage position of the blades on the vessel, the blades can then be brought to the feeding position, i.e. a position in which the blade is received on the cart, by the crane or other manipulator by bringing the blade from the storage or seafastened position into the blade receiver of the cart. During this feeding, the blade may be fully guided by a yoke suspended in a crane structure, or in another type of manipulator.

The blade installer unit can thus be flexible in positioning and can be placed aft/forward or port/starboard on the vessel or barge. The size of the unit may enable the unit to be retrofit to existing vessels and the unit can also be used as a cost effective solution for blade and other maintenance service.

### Description of the figures

In the following, the invention will be explained further by means of a description of non-limiting examples shown in the figures, along with descriptions of examples of possible variations. The figures are schematic and merely show examples.

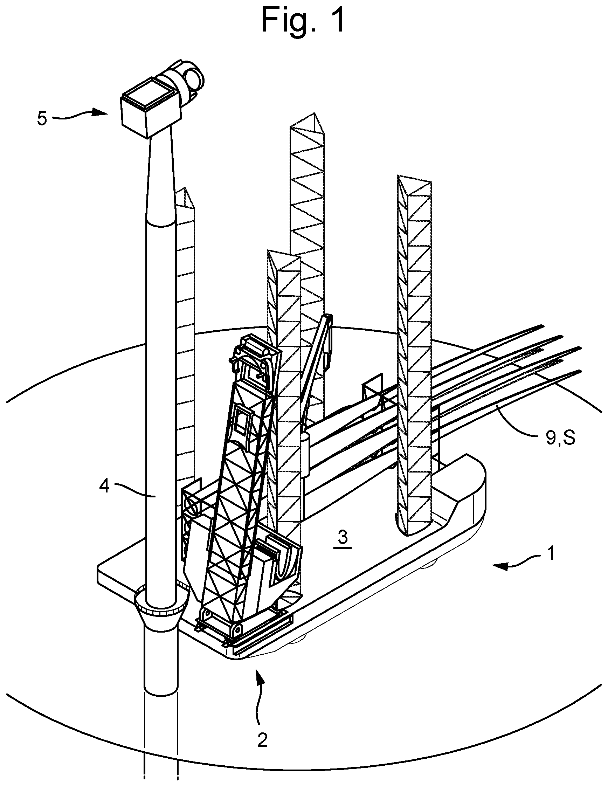

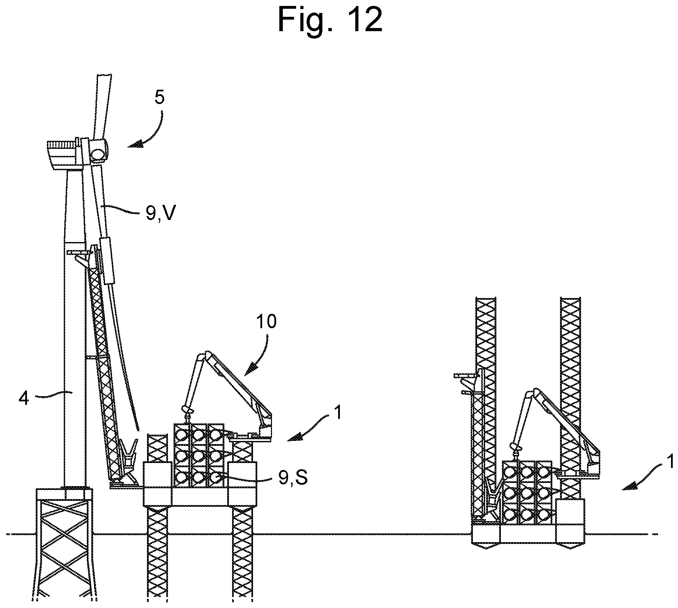

Figs. 1 to 11 show perspective views, and Fig. 12 shows a side view, of a vessel with a blade installer unit, a wind turbine tower with nacelle, and a wind turbine blade, in particular illustrating subsequent stages of a blade installation method.
Figure 1 shows the vessel 1, here a jack-up vessel, with the blade installer unit 2 in transport position, also called transit position. This is the position of the blade installer unit when the vessel is sailing. The blade installer unit can be provided forward, aft, in a corner or in the middle, at the stern, etc. As explained elsewhere herein with reference to Fig. 12, various positions on the deck 3 may be possible, and may depend on the deck arrangement. The vessel arrives at the site location where the wind turbine tower 4 and the nacelle 5 are already pre-installed.

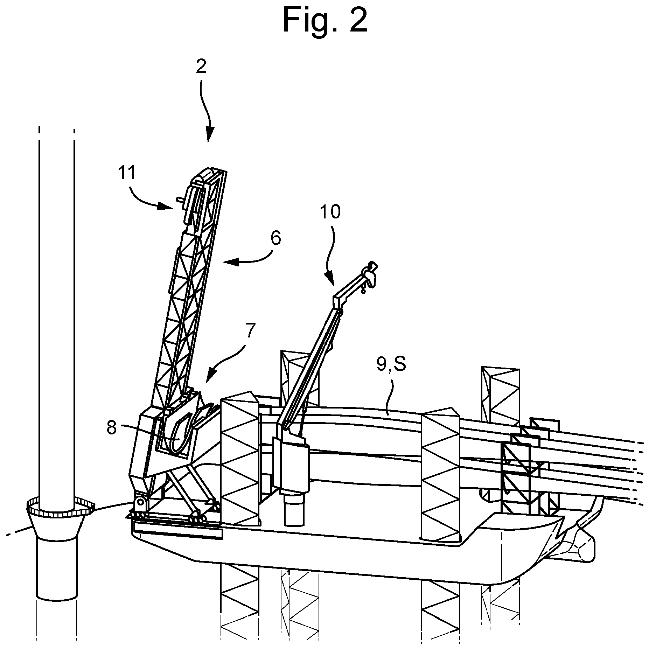

Figure 2 shows a different perspective view of the blade installer unit in, here, the elevated position of the jack-up vessel. The blade installer unit 2 comprises a boom 6, here an extendable boom, with a cart 7 movable over the boom. The cart here has a blade receiver 8 in which a wind turbine blade 9 can be inserted by means of the available deck crane 10. At the upper end of the boom, a wind turbine tower gripping device 11 (also denoted tower gripping device unit herein) is provided, here shown in folded position. Alternatively or additionally, such a tower gripping device may be arranged elsewhere along the boom.

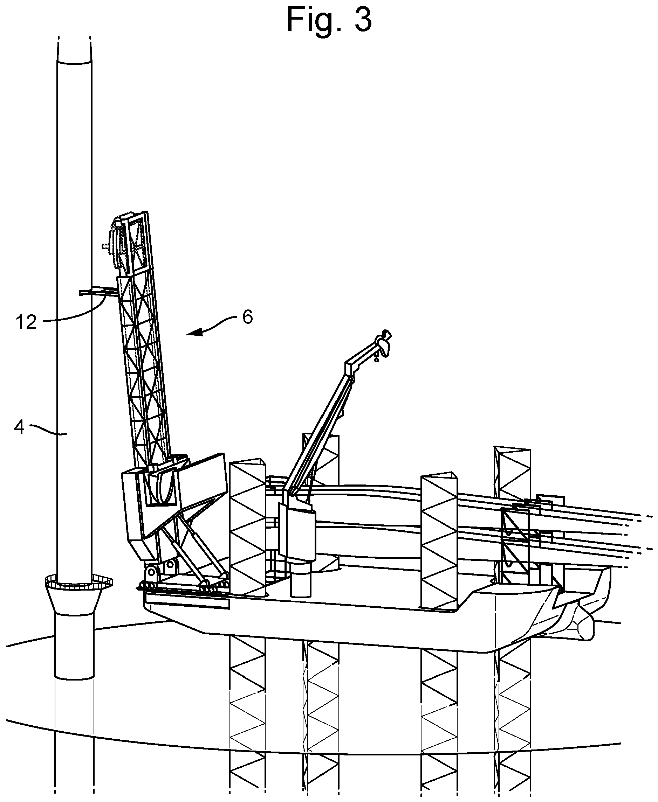

Figure 3 shows that the boom 6 is hinged towards the wind turbine tower 4. A tower strut 12 is folded out until it engages the tower and provides first support of the boom to the tower. The tower strut is optional and may be provided and/or used depending on weather conditions.

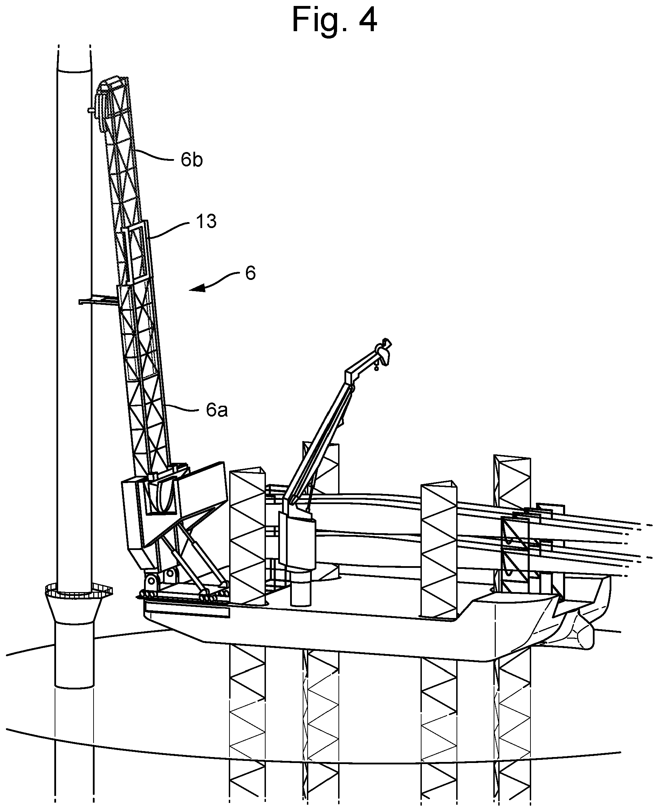

Figure 4 shows the boom 6 in extended position by extending an extendable boom portion 6b outward with respect to, here out from, a base boom portion 6a. In the extended position, the boom reaches towards the upper end of the wind turbine, in particular further towards said upper end than in a more retracted position. However, in view of the height of the wind turbine towers, the boom may often not reach the top end of the tower.

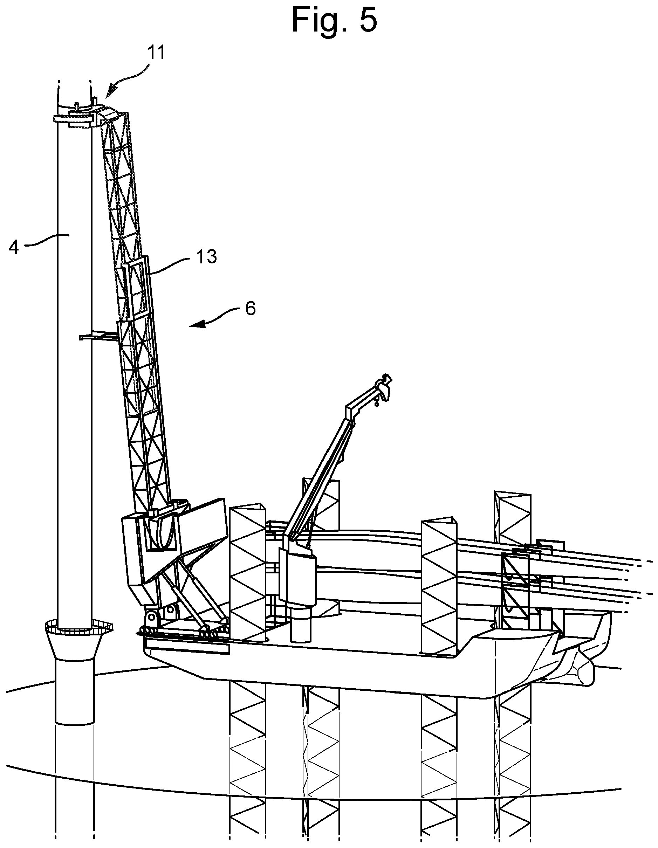

Figure 5 shows the tower gripping device 11, here provided at the upper end of the boom, is folded out towards an engagement position. In the engagement position, the tower gripping device engages the tower 4 and grips the tower to provide a firm support to the boom 6. In an advantageous embodiment, the tower gripping device may first be synchronized with the tower motion before engaging with the tower.

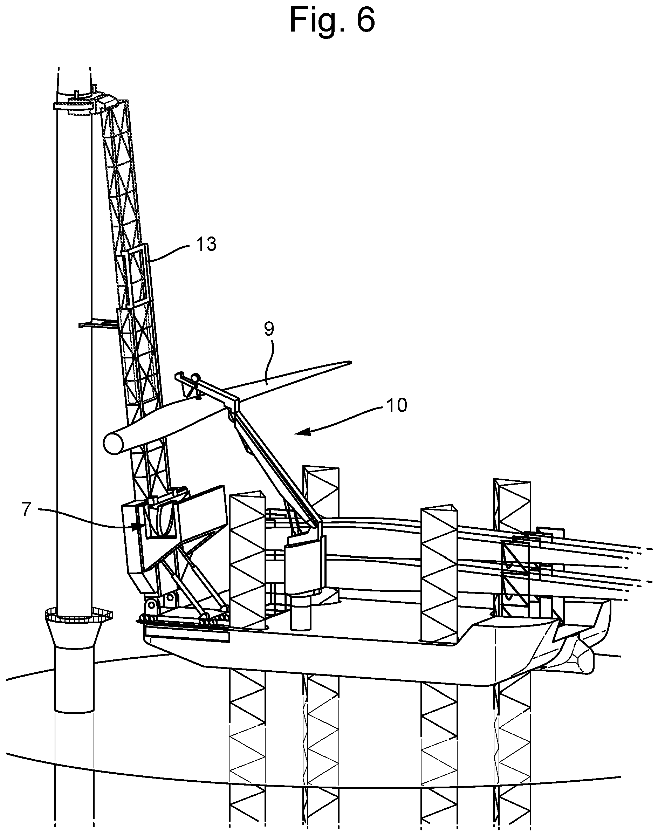

Figure 6 shows the blade 9 being put into the blade receiver of the cart 7 by means of the available deck crane 10, for example using a conventional suspension means and method for a wind turbine blade. The blade is put in approximately horizontal position in the cart.

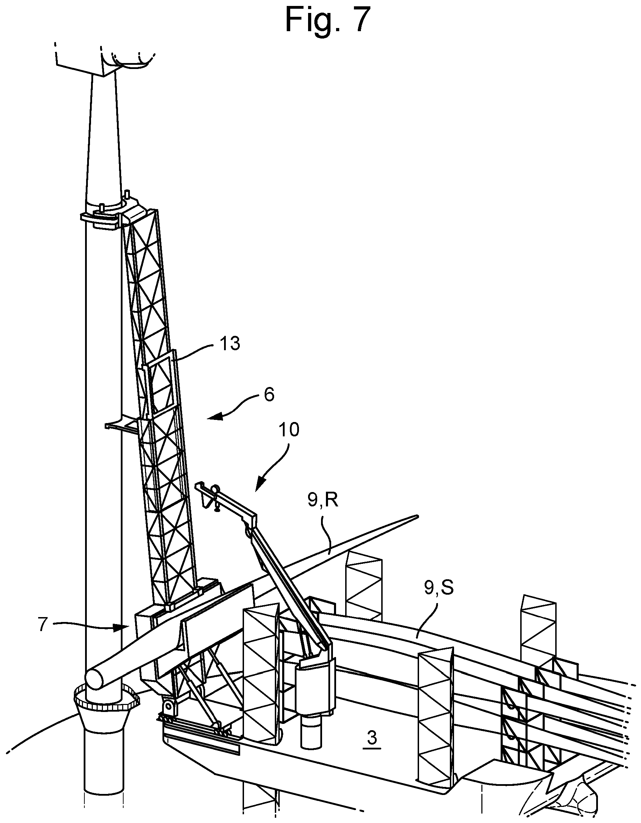

Figure 7 shows that when the blade 9 is in the blade receiver of the cart 7, the crane 10 retracts. The cart can start moving upward along the boom 6.

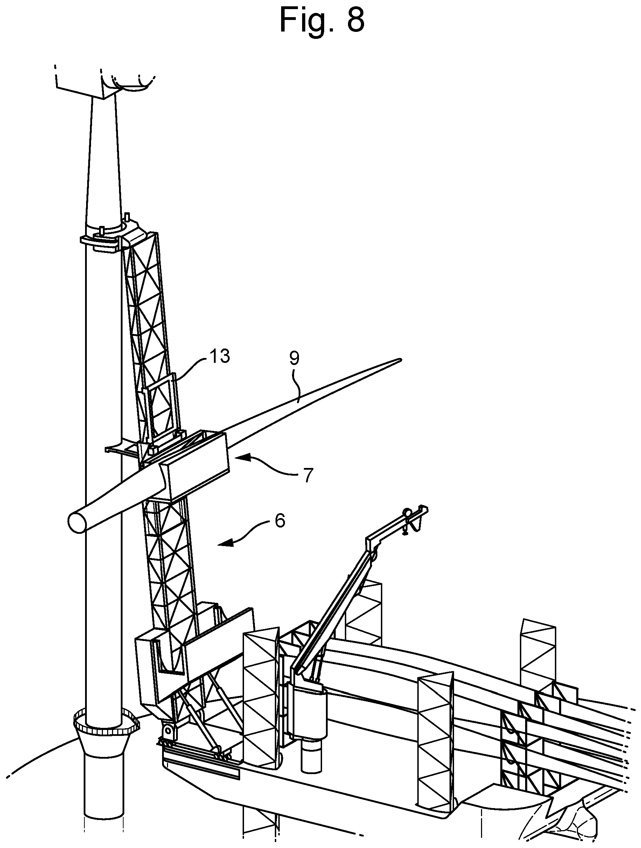

Figure 8 shows the cart 7 is moving upward along the boom 6, with the blade 9 in horizontal position in the blade receiver.

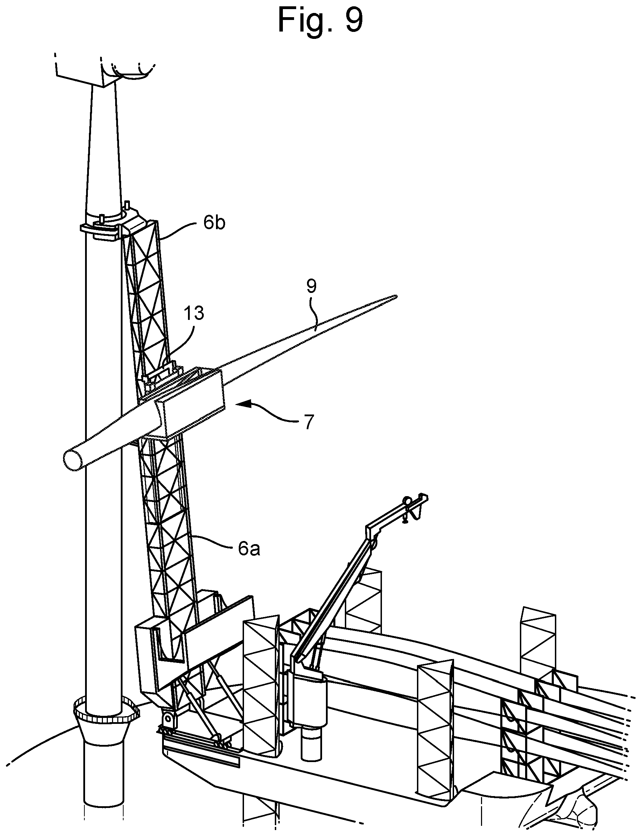

Figure 9 shows the cart 7 with the blade 9 in approximately horizontal position is moving further upward, now along the extended portion 6b of the boom. Here, the cart 7 is moved onto an adapter unit 13, here a frame based adapter unit 13, which is movable along the extendable boom portion 6b and configured to receive the cart 7 thereon from when the cart 7 moved upward from the base boom portion 6a. Along the extendable boom portion 6b, the cart 7 and the adapter unit 6 can move together, wherein the adapter unit 6 can provide an intermediate interface between the extendable boom portion 6b and the cart 7. The cart 7 itself is here dimensioned for the base boom portion 6a which is here somewhat wider than the extendable boom portion 6b to allow the extendable boom portion 6b to move in the base boom portion 6a. Different solutions are possible, e.g. wherein the cart 7 itself is configured to move along boom portions of different widths, e.g. by having multiple corresponding sets of wheels.

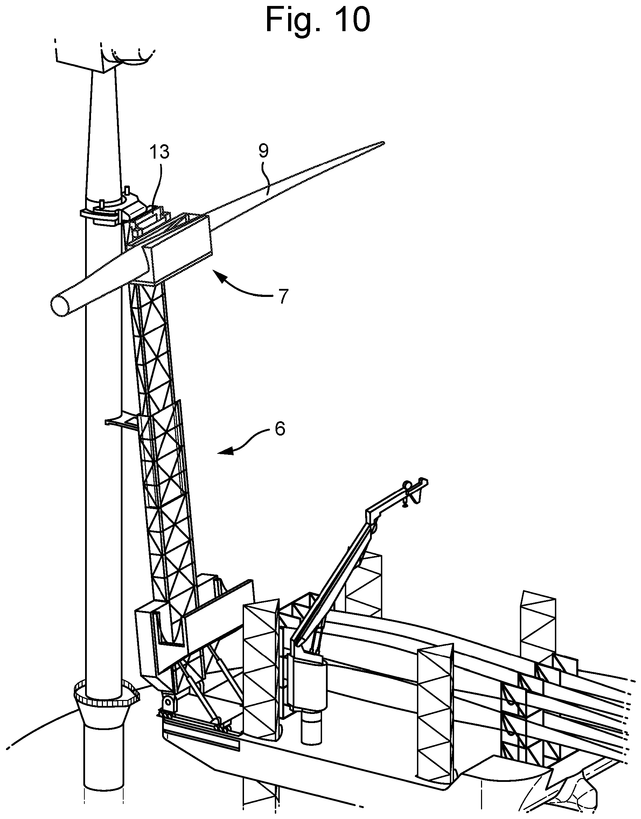

Figure 10 shows the cart 7 with the blade 9 in about horizontal position in the blade receiver, has reached the upper end of the boom 6, together with the adapter unit 13.

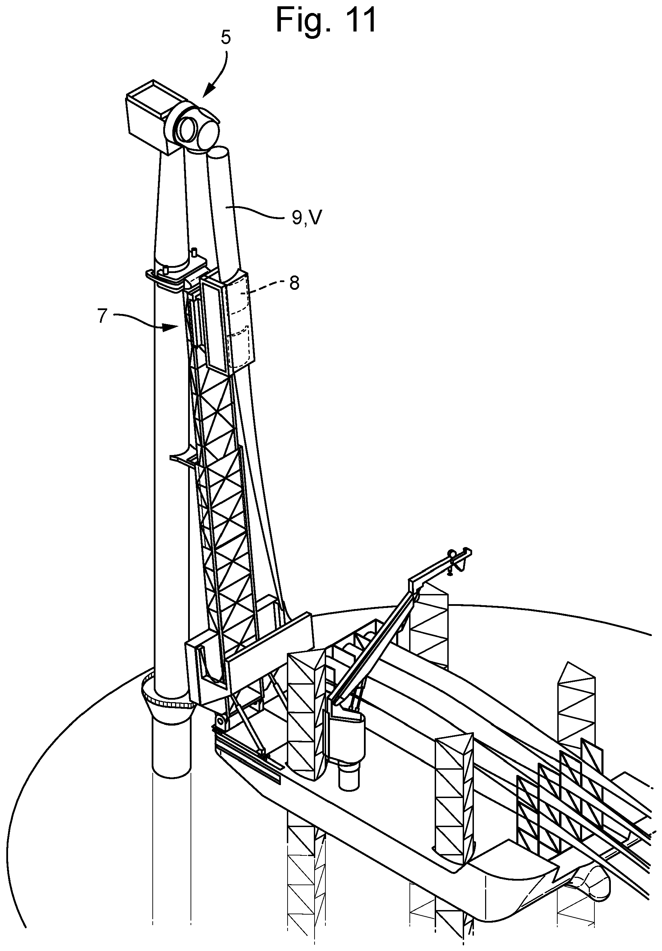

Figure 11 shows the cart, in particular the blade receiver 8 in its upper position, being rotated to a vertical position V such that the blade 9 becomes oriented vertically allowing it to mate with the blade receiving interface of the nacelle 5, said blade receiving interface being substantially downward facing to facilitate engagement of the blade from below. Alternatively, the blade receiver 8 may rotate towards an approximately vertical position already during its upward movement along the boom. In that case, rotating of the blade receiver 8 may be done simultaneously with the upward movement of the cart. At the upper end of the boom, more precisely at the now upward facing end of the blade 9, the blade can then be fixated to the nacelle 5 by bolts. When the blade has been fixed to the nacelle, the blade receiver 8 may open and retract to release the blade. When clear of the blade, the blade receiver can rotate back to the horizontal position, and the cart 7 can move to its lower position. The nacelle 5 may then be rotated. The blade installation may be repeated until the three blades are fixed to the nacelle 5. The vessel 1, in case of a jack-up vessel, may go to floating position (see right hand side of Fig. 12) and sail to the next pre-installed wind turbine tower for the installation of the blades thereto.
Figure 12 shows the blade 9, in vertical position V, is being pushed upward to engage with the nacelle 5. In Fig. 12, it can be seen that in this example blades 9 are stored on the deck of the vessel in an orientation parallel to a horizontal position of the blade 9 when initially received by the blade receiving cart, so that the orientation of the blade need not be altered by the deck crane 10. By contrast, in the example of Figs. 1-11, the deck crane 10 needs to be operated to swerve the blade 9 by about 90 degrees about a vertical axis when moving the blade from its storage position S on the deck 3 to its received position R on the cart 7, see Fig. 7.

Although the invention has been explained further herein using examples and figures, these do not limit the scope of the invention as long as they are defined by the claims. Many variations, combinations and extensions are possible, as will be appreciated by the skilled person having the benefit of the present disclosure and all such variants are included within the scope of the invention as defined by the claims.

## Claims

1. Method for installing a wind turbine blade to a nacelle of an offshore wind turbine, comprising the steps of:
- Providing a vessel or barge with a number of wind turbine blades and a blade installer unit (2) comprising a blade receiving cart (7) including a blade receiver (8); wherein the blade installer unit (2) is placed on the vessel or barge;
- At the offshore wind turbine, bringing a boom (6) of the blade installer unit towards a wind turbine tower of the wind turbine, in particular with respect to the vessel;
- Actuating a tower gripping device unit (11), provided to the boom, until the tower gripping device unit (11) engages the tower (4);
- Inserting a blade into the blade receiving cart, that is positioned at a distance from an upper end of the boom, wherein the blade is in approximately horizontal position in the cart;
- Moving the blade receiving cart (7) up, over the boom, towards the upper end of the boom (6) of the blade installer unit (2);
- Rotating the blade receiver (8), with respect to the cart (7), with the blade (9) until the blade is in approximately vertical position;
- Moving the blade (9) with respect to the cart until the blade engages a blade receiving opening of the nacelle (5) for coupling to the nacelle (5).

2. Method according to claim 1, wherein the boom (6) of the blade installer unit (2) is aligned with the wind turbine tower (4).

3. Method according to claim 2, wherein the aligning of the boom (6) comprises moving the boom (6) with respect to a deck of the vessel using a skid by which the blade installer unit (2) is movably mounted to the deck.

4. Method according to claim 3, wherein the skid is an XY-skid allowing for longitudinal movement and transverse movement over the deck with respect to the deck.

5. Method according to any of the preceding claims, wherein the boom (6) of the blade installer unit (2) is provided on a cantilever, which cantilever is movable with respect to a deck of the vessel, and can, in extended position, reach beyond the deck.

6. Method according to any of the preceding claims, wherein the blade (9) is brought into a blade receiver of the blade receiving cart (7) by a manipulator, in particular a crane, mounted on the vessel or barge.

7. Method according to any of the preceding claims, comprising extending the boom (6) of the blade installer unit (2) by moving an extendable boom portion outward with respect to a base boom portion of the boom.

8. Method according to claim 7, wherein the tower gripping device unit (11) is folded out from the boom (6) to engage with the wind turbine tower (4) when the boom (6) has been extended.

9. Method according to any of the preceding claims, comprising adjusting the boom angle of the boom (6).

10. Method according to any of the preceding claims, wherein the vessel or barge is a jack-up vessel, wherein the jack-up vessel is in elevated position while the blade installer unit (2) engages the wind turbine.

11. Method according to any of the preceding claims, wherein the blade is coupled to the nacelle.

12. Blade installer unit for carrying out the method according to any of the preceding claims, configured to be mounted on a vessel or a barge, comprising a boom (6); a blade receiving cart (7) movable along the boom (6); a blade receiver (8) mounted to the blade receiving cart (7) and configured to rotate with respect to the cart (7) for rotating a wind turbine blade (9) from an approximately horizontal position to an approximately vertical position; and a tower gripping device unit (11) provided at the boom (6) and configured to engage a wind turbine tower (4).

13. Vessel or barge, preferably jack-up vessel, provided with a blade installer unit according to claim 12.

14. Vessel or barge according to claim 13, further provided with a manipulator such as a deck crane for inserting the blade (9) into the blade receiving cart (7) in a method according to any of claims 1 - 11.

15. Combination of a vessel or barge according to claim 13 or 14, and a number of wind turbine blades (9), in particular in storage positions on a deck of the vessel or barge, for installation of the blades to a nacelle of an offshore wind turbine in the method according to any of claims 1 - 11.

## Patentansprüche

1. Verfahren zum Anbringen eines Windturbinenblattes an einer Gondel einer Offshore-Windkraftanlage, das die folgenden Schritte umfasst:
Bereitstellung eines Schiffes oder Lastkahns mit einer Anzahl von Windturbinenblättern und einer Blattmontageeinheit (2), die einen Blattaufnahmewagen (7) mit einem Blattaufnehmer (8) umfasst; wobei die Blattmontageeinheit (2) auf dem Schiff oder Lastkahn platziert wird;
Heranführen eines Auslegers (6) der Blattmontageeinheit an den Windkraftanlagenturm, insbesondere in Bezug auf das Schiff, bei der Offshore-Windkraftanlage;
Betätigen einer am Ausleger angebrachten Turmgreifeinheit (11), bis die Turmgreifeinheit (11) am Turm (4) einrastet;
Einsetzen eines Blattes in den Blattaufnahmewagen, der in einem Abstand vom oberen Ende des Auslegers positioniert ist, wobei sich das Blatt im Wagen in einer annähernd horizontalen Position befindet;
Bewegen des Blattaufnahmewagens (7) nach oben, über den Ausleger, in Richtung des oberen Endes des Auslegers (6) der Blattmontageeinheit (2);
Drehen des Blattaufnehmers (8) zusammen mit dem Blatt (9) relativ zum Wagen (7), bis sich das Blatt in einer annähernd vertikalen Position befindet;
Bewegen des Blattes (9) relativ zum Wagen, bis es in eine Blattaufnahmeöffnung der Gondel (5) einrastet, um es mit der Gondel (5) zu verbinden.

2. Verfahren nach Anspruch 1, wobei der Ausleger (6) der Blattmontageeinheit (2) auf den Windkraftanlagenturm (4) ausgerichtet ist.

3. Verfahren nach Anspruch 2, wobei das Ausrichten des Auslegers (6) das Bewegen des Auslegers (6) relativ zu einem Deck des Schiffes unter Verwendung eines Verschubsystems umfasst, durch welches die Blattmontageeinheit (2) beweglich am Deck befestigt ist.

4. Verfahren nach Anspruch 3, wobei es sich bei dem Verschubsystem um ein XY-Verschubsystem handelt, das Längs- und Querbewegungen über das Deck relativ zum Deck ermöglicht.

5. Verfahren nach einem der vorstehenden Ansprüche, wobei der Ausleger (6) der Blattmontageeinheit (2) an einem Kragträger angeordnet ist, der relativ zu einem Deck des Schiffes beweglich ist und in ausgefahrener Position über das Deck hinausragen kann.

6. Verfahren nach einem der vorstehenden Ansprüche, wobei das Blatt (9) durch einen am Schiff oder Lastkahn montierten Manipulator, insbesondere einen Kran, in einen Blattaufnehmer des Blattaufnahmewagens (7) gebracht wird.

7. Verfahren nach einem der vorstehenden Ansprüche, welches das Ausfahren des Auslegers (6) der Blattmontageeinheit (2) umfasst, indem ein ausfahrbarer Auslegerabschnitt relativ zu einem Basisauslegerabschnitt des Auslegers nach außen bewegt wird.

8. Verfahren nach Anspruch 7, wobei die Turmgreifeinheit (11) aus dem Ausleger (6) ausgeklappt wird, um am Windkraftanlagenturm (4) einzurasten, wenn der Ausleger (6) ausgefahren wurde.

9. Verfahren nach einem der vorstehenden Ansprüche, welches das Einstellen des Auslegerwinkels des Auslegers (6) umfasst.

10. Verfahren nach einem der vorstehenden Ansprüche, wobei es sich bei dem Schiff oder Lastkahn um ein Errichterschiff handelt, wobei sich das Errichterschiff in angehobener Position befindet, während die Blattmontageeinheit (2) in die Windkraftanlage einrastet.

11. Verfahren nach einem der vorstehenden Ansprüche, wobei das Blatt mit der Gondel verbunden ist.

12. Blattmontageeinheit zur Durchführung des Verfahrens gemäß einem der vorstehenden Ansprüche, die zur Montage auf einem Schiff oder einem Lastkahn ausgelegt ist und
einen Ausleger (6);
einen entlang des Auslegers (6) beweglichen Blattaufnahmewagen (7);
einen an dem Blattaufnahmewagen (7) montierten Blattaufnehmer (8), der so ausgelegt ist, dass er sich relativ zum Wagen (7) dreht, um ein Windkraftanlagenblatt (9) aus einer annähernd horizontalen Position in eine annähernd vertikale Position zu drehen; sowie eine am Ausleger (6) vorgesehene Turmgreifeinheit (11) umfasst, die so ausgelegt ist, dass sie mit einem Windkraftanlagenturm (4) in Eingriff kommt.

13. Schiff oder Lastkahn, vorzugsweise ein Errichterschiff, das mit einer Blattmontageeinheit gemäß Anspruch 12 ausgestattet ist.

14. Schiff oder Lastkahn nach Anspruch 13, das ferner mit einem Manipulator, wie beispielsweise einem Deckskran, ausgestattet ist, um das Blatt (9) bei einem Verfahren gemäß einem der Ansprüche 1 bis 11 in den Blattaufnahmewagen (7) einzuführen.

15. Kombination aus einem Schiff oder Lastkahn gemäß Anspruch 13 oder 14 und einer Anzahl von Windturbinenblättern (9), insbesondere in Lagerpositionen auf einem Deck des Schiffes oder Lastkahns, zum Anbringen der Blätter an einer Gondel einer Offshore-Windkraftanlage nach dem Verfahren gemäß einem der Ansprüche 1 bis 11.

## Revendications

1. Procédé pour installer une pale d'éolienne sur une nacelle d'une éolienne en haute mer, comprenant les étapes comprenant les faits de :
prévoir un navire ou une barge avec un certain nombre de pales d'éolienne et une unité d'installation de pale (2) comprenant un chariot de réception de pale (7) comprenant un récepteur de pale (8) ; dans lequel l'unité d'installation de pale (2) est placée sur le navire ou la barge ;
au niveau de l'éolienne en haute mer, amener une flèche (6) de l'unité d'installation de pale vers une tour d'éolienne de l'éolienne, en particulier par rapport au navire ;
actionner une unité de dispositif de préhension de tour (11), prévue sur la flèche, jusqu'à ce que l'unité de dispositif de préhension de tour (11) mette la tour (4) en prise ;
insérer une pale dans le chariot de réception de pale, qui est positionné à une distance d'une extrémité supérieure de la flèche, dans lequel la pale est dans une position approximativement horizontale dans le chariot ;
déplacer le chariot de réception de pale (7) vers le haut, sur la flèche, vers l'extrémité supérieure de la flèche (6) de l'unité d'installation de pale (2) ;
faire tourner le récepteur de pale (8), par rapport au chariot (7), avec la pale (9) jusqu'à ce que la pale soit dans une position approximativement verticale ;
déplacer la pale (9) par rapport au chariot jusqu'à ce que la pale mette en prise une ouverture de réception de pale de la nacelle (5) pour se coupler à la nacelle (5).

2. Procédé selon la revendication 1, dans lequel la flèche (6) de l'unité d'installation de pale (2) est alignée avec la tour d'éolienne (4).

3. Procédé selon la revendication 2, dans lequel l'alignement de la flèche (6) comprend le déplacement de la flèche (6) par rapport à un pont du navire en utilisant un patin grâce auquel l'unité d'installation de pale (2) est montée, de manière mobile, sur le pont.

4. Procédé selon la revendication 3, dans lequel le patin est un patin XY permettant le mouvement longitudinal et le mouvement transversal sur le pont par rapport au pont.

5. Procédé selon l'une quelconque des revendications précédentes, dans lequel la flèche (6) de l'unité d'installation de pale (2) est prévue sur une structure en porte-à-faux, laquelle structure en porte-à-faux est mobile par rapport à un pont du navire et peut, en position déployée, atteindre une zone située au-delà du pont.

6. Procédé selon l'une quelconque des revendications précédentes, dans lequel la pale (9) est amenée dans un récepteur de pale du chariot de réception de pale (7) par un manipulateur, en particulier une grue, monté sur le navire ou la barge.

7. Procédé selon l'une quelconque des revendications précédentes, comprenant le fait de déployer la flèche (6) de l'unité d'installation de pale (2) en déplaçant une partie de flèche extensible vers l'extérieur par rapport à une partie de flèche de base de la flèche.

8. Procédé selon la revendication 7, dans lequel l'unité de dispositif de préhension de tour (11) est dépliée depuis la flèche (6) pour se mettre en prise avec la tour d'éolienne (4), lorsque la flèche (6) a été déployée.

9. Procédé selon l'une quelconque des revendications précédentes, comprenant le fait de régler l'angle de flèche de la flèche (6).

10. Procédé selon l'une quelconque des revendications précédentes, dans lequel le navire ou la barge est un navire autoélévateur, dans lequel le navire autoélévateur est en position élevée alors que l'unité d'installation de pale (2) met l'éolienne en prise.

11. Procédé selon l'une quelconque des revendications précédentes, dans lequel la pale est couplée à la nacelle.

12. Unité d'installation de pale pour réaliser le procédé selon l'une quelconque des revendications précédentes, configurée pour être montée sur un navire ou une barge, comprenant une flèche (6) ; un chariot de réception de pale (7) mobile le long de la flèche (6) ; un récepteur de pale (8) monté sur le chariot de réception de pale (7) et configuré pour tourner par rapport au chariot (7) afin de faire tourner une pale d'éolienne (9) d'une position approximativement horizontale à une position approximativement verticale ; et une unité de dispositif de préhension de tour (11) prévue au niveau de la flèche (6) et configurée pour mettre une tour d'éolienne (4) en prise.

13. Navire ou barge, de préférence un navire autoélévateur, prévu(e) avec une unité d'installation de pale selon la revendication 12.

14. Navire ou barge selon la revendication 13, prévu(e) en outre avec un manipulateur comme une grue de pont pour insérer la pale (9) dans le chariot de réception de pale (7) lors d'un procédé selon l'une quelconque des revendications 1 à 11.

15. Combinaison d'un navire ou d'une barge selon la revendication 13 ou 14 et d'un certain nombre de pales d'éolienne (9), en particulier dans des positions de stockage sur un pont du navire ou de la barge, pour l'installation des pales sur une nacelle d'une éolienne en haute mer lors du procédé selon l'une quelconque des revendications 1 à 11.
